# DEMANDE DE BREVET EUROPEEN

(11) **EP 1 156 301 A1**
(43) Date de publication de la demande: **21.11.2001**
(21) Numéro de dépôt: 00500092.2
(22) Date de dépôt: 16.05.2000
(51) Int. Cl.: G01F 17/00, B67C 3/20

(54) **Systemè de contrôle de la contenance de récipients**

(71) Demandeur: Vidrala, S.A., 01400 Llodio, (Alava) (ES); Avacon, S.A., 01400 Llodio (Alava) (ES)
(72) Inventeur: Dutto Fantini, Ivo, 01400 Llodio (Alava) (ES); Aragon Lopez, Antonio, 01400 Llodio (Alava) (ES); Colomino Cebrian, Francisco José, 01400 Llodio (Alava) (ES); Arechaga Camara, Alfonso, 01400 Llodio (Alava) (ES)
(74) Mandataire: Urizar Barandiaran, Miguel Angel

(57) **Abrégé**

Système de contrôle de la contenance de récipients qui est composé d'un premier guide linéaire horizontal (3) où se trouve une tête de pinces (13) qui peut se déplacer horizontalement et tourner sur le plan horizontal, avec une première pince (1) et une deuxième pince (2) pour l'entrée et la sortie d'un récipient à vide (b₁); un deuxième guide linéaire horizontal (4) où se déplacent des mécanismes pour le remplissage total ou partiel de quantité prédéterminée; une bascule (5) qui pèse le récipient (b₁) à vide et rempli à ras bord ou partiellement avec une quantité prédéterminée, envoyant les données de pesage à un microprocesseur qui commande le système programmé pour différencier les récipients de remplissage total et les récipients de remplissage partiel et calcule la contenance en se basant sur les données de pesage.

Pour application dans la fabrication de récipients en verre

## Description

Pour différentes raisons, les récipients, notamment les bouteilles en verre, subissent des variations dans leur contenance pour un même type de récipient et d'usager.

Si le produit à introduire dans le récipient a un prix fort par cm³, une liqueur, ou un cognac de grande qualité, par exemple, les augmentations de contenance par rapport à la quantité théoriquement établie peuvent supposer de grandes pertes pour la marque correspondante.

Pour cela, il est nécessaire que la contenance des récipients ne subisse aucune variation et au cas échéant, il faut pouvoir la détecter de façon rapide et économique.

Le problème étant ainsi défini, le demandeur, ne connaissant aucun système, processus ou machine identiques, a donc mis au point le système de contrôle de la contenance de récipients qui est l'objet de l'invention.

Le système se base sur le contrôle de la contenance de récipients qui comprend:
a) un premier guide linéaire horizontal où se trouve une tête de pinces qui peut se déplacer horizontalement et tourner sur le plan horizontal avec une première pince et une deuxième pince respectivement pour l'entrée et la sortie d'un récipient vide;
b) un deuxième guide linéaire horizontal où se trouve une tête de remplissage qui peut se déplacer horizontalement sur ce deuxième guide et qui est équipée pour le remplissage total ou partiel d'une quantité prédéterminée.
c) une bascule qui pèse le récipient à vide et rempli dans sa totalité ou avec une quantité partielle prédéterminée, envoyant les données de pesage à
d) un microprocesseur qui commande le système programmé afin de différencier les récipients de remplissage total et les récipients de remplissage partiel et qui calcule la contenance en se basant sur les données de pesage.

Il est caractérisé également par le fait que les mécanismes de remplissage comprennent un ensemble de remplissage total et liquide et un ensemble de mise à niveau liquide.

D'autre part, l'ensemble de remplissage de liquide dispose d'une sonde qui se déplace à la verticale et l'ensemble de mise à niveau dispose d'un tube d'aspiration qui se déplace à la verticale sous l'action d'un moteur de précision.

Géométriquement, sur la circonférence du rayon de rotation de la première pince, une position de pesage et une position de remplissage sont prévues, le centre de rotation étant situé sur la bissectrice de la première et de la deuxième pince qui sont solidaires.

Avec les données de pesage, le microprocesseur décide, en se basant sur les programmes/algorithmes conventionnels de statistique, s'il y a des erreurs ou non à corriger.

Pour mieux comprendre l'objet de la présente invention, on a choisi de représenter sur les plans une forme de réalisation pratique susceptible de subir quelques changements accessoires qui ne trahiront pas l'idée de base.

La figure 1 est une vue en élévation d'une réalisation pratique du système objet de l'invention, montrant à gauche la première pince (1) prenant la bouteille (b₁) et à droite la deuxième pince (2) retournant la bouteille (b₁).

La figure 2 est une section AA de la figure 1, montrant le système dans la phase de remplissage de la bouteille (b₁).

La figure 3 est une section BB de la figure 1, montrant le système dans la phase de mise à niveau du liquide de la bouteille (b₁).

La figure 4 est une vue en plan de la figure 1, montrant la disposition géométrique des éléments.

La figure 5 est une vue en section CC de la figure 1, montrant le système dans différentes phases.

Voici un exemple de réalisation pratique mais non limitatif de la présente invention.

Les bouteilles (b₁) avancent sur la ligne de transport (t₁) qui peut correspondre à celle du laboratoire, à une ligne collatérale, à la propre ligne de fabrication, etc.

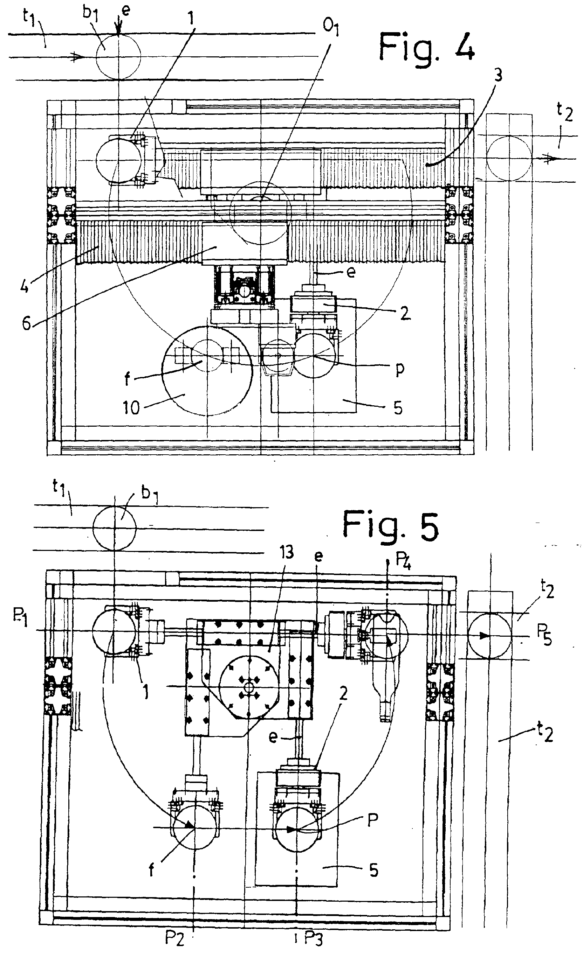

La machine est munie d'un premier guide linéaire horizontal (3) où se trouve une tête à pinces (13) qui peut se déplacer, avec une première pince (1) pour la ligne de transport (t₁) d'entrée et une deuxième pince (2) pour la ligne de transport de sortie (t₂), étant préférable que les deux pinces (1), (2) soient solidaires entre elles, bien qu'apparaissant sur les dessins à 90° (figure 4).

La machine possède également un deuxième guide linéaire horizontal (4) où se trouve un guide vertical qui peut se déplacer verticalement sur ce deuxième guide (4) qui sert de tête de remplissage (6) et qui est équipé d'un ensemble de remplissage (7) de liquide et d'un ensemble de mise à niveau (9) de liquide.

La bouteille (b₁) à contrôler passe sur la ligne de transport d'entrée (t₁) à la machine sous l'action par exemple d'un poussoir (e) ou de tout autre mécanisme conventionnel (figure 4).

Le fonctionnement se déroulera comme suit:

Le centre de rotation (0₁) de la tête (13) des pinces est situé sur la bissectrice des positions initiales (P₁), (P₃) respectivement de la première pince (1) et de la deuxième pince (2).

La première pince (1) prend la bouteille (b₁) et la met dans une position (P₂) perpendiculaire à la position initiale (P₁), ensuite la tête (13) se déplace mettant la première pince (1) sur la position (P₃) sur une bascule (5) sur le point de pesage (p) où la bouteille (b₁) est pesée.

La tête (13) revient en translation, mettant la première pince (1) en position perpendiculaire (P₂) au point de remplissage (f) dans la zone de remplissage (10).

La machine sait, grâce à son microprocesseur et ses programmes correspondants quel type de bouteille (b₁) est contrôlée, celle-ci dépendant du client à qui elle est destinée.

Le client peut choisir deux types de remplissage de bouteille (b₁) avec son produit:
a) remplissage total
b) remplissage partiel jusqu'à une certaine hauteur (h) du goulot de la bouteille.

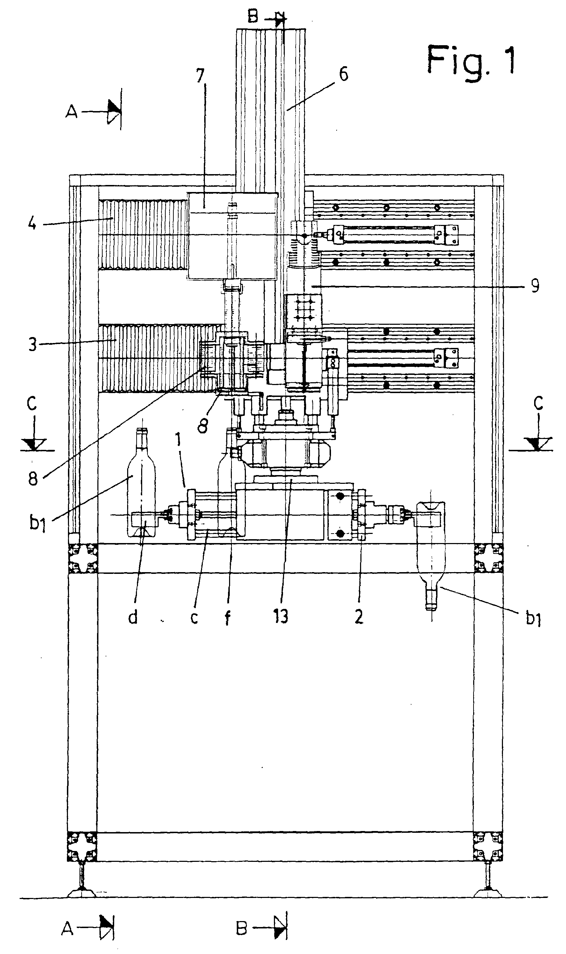

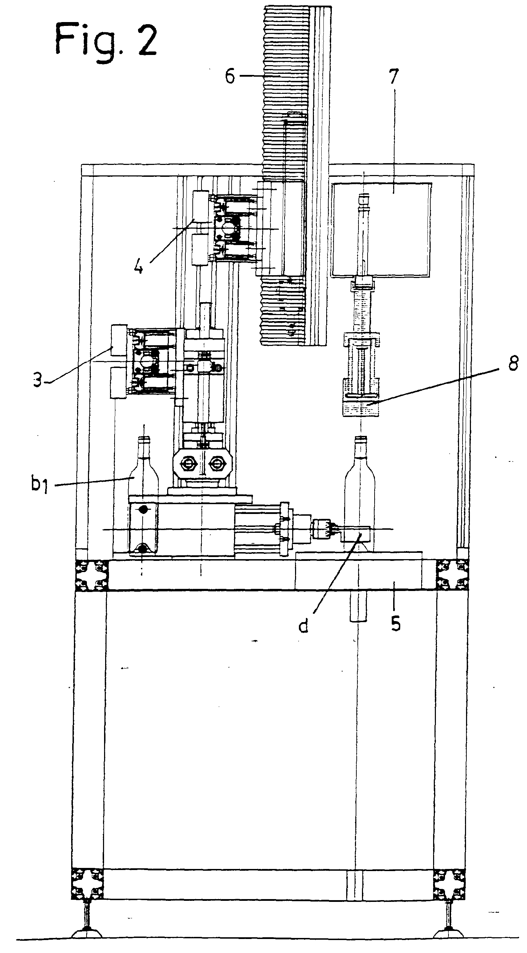

L'ensemble de remplissage (7) est placé à la verticale par rapport au point de remplissage (f) et en déplaçant verticalement la tête de remplissage (6) ou de préférence la sonde de remplissage (8), la bouteille (b₁) est remplie à ras bord (figures 1 et 2).

Si le type de remplissage est partiel (b), l'ensemble de mise à niveau (9) se mettra en marche et si le remplissage est total (a), cet ensemble ne sera pas utilisé.

En cas de remplissage partiel (b), on monte le ou les éléments qui ont été descendus de l'ensemble de remplissage (7), on déplace horizontalement la tête de remplissage (6) pour placer l'ensemble de mise à niveau (9) à la verticale par rapport à la bouteille (b₁) (position f) bien que cela puisse être le contraire, déplaçant alors la bouteille (b₁).

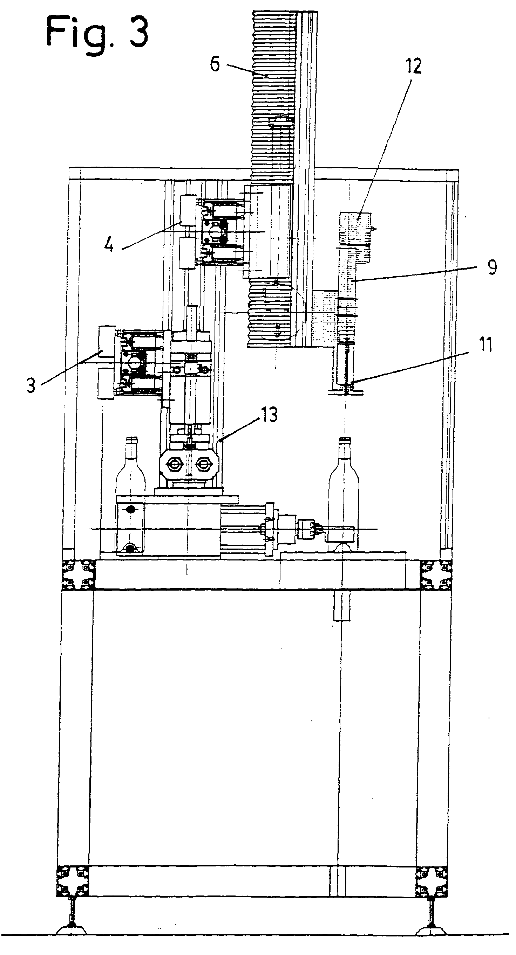

Un élément de l'ensemble de mise à niveau (9) se déplace à la verticale pour buter contre la surface supérieure du goulot de la bouteille (b₁) et un moteur de précision (12) déplace le tube (11) d'absorption à une hauteur (h) identique à la hauteur (h) (quantité prédéterminée) où doit s'arrêter le remplissage de la bouteille (b₁) et absorbe le liquide correspondant (figure 3).

On remonte le tube (11).

A partir de ce mouvement, le fonctionnement est identique pour les deux types de remplissage (a), (b).

La première pince (1) déplace la bouteille (b₁) avec le liquide du point de remplissage (f) au point de pesage (p) où elle la dépose et la pèse, obtenant la valeur exacte de la contenance de la bouteille (b₁), ce dont il s'agissait en comparant la valeur de pesage de la bouteille à vide avec celle de la bouteille pleine ou partiellement pleine à un niveau prédéterminé.

La première pince (1) revient à sa position initiale (P₁).

Etant donné que la première pince (1) et la deuxième pince (2) sont solidaires à 90°, voici le fonctionnement de la deuxième pince (2).

Quand la première pince (1) est en position initiale (P₁), la deuxième pince (2) est dans la position (P₃) sur la bascule (5) et prend la bouteille (b₁) pleine que la première pince 1 a laissée, tourne sur son axe (e) par exemple à 180° et vide le liquide alors que la première pince (P₂) a pris un nouveau récipient et tourne jusqu'à la position perpendiculaire (P₂) ainsi que la deuxième pince (2) solidaire, ce qui est représenté sur la figure 5 avec la position (P₄). La deuxième pince (2) tourne une nouvelle fois sur son axe (e) pour mettre la bouteille (b₁) à la verticale.

La première pince (1) se déplace jusqu'au pesage (p) et la deuxième pince (2) sur la position (P₅) pour laisser le récipient vide sur la ligne de transport de sortie (t₂).

## Revendications

1. Système de contrôle de la contenance de récipients qui se compose de:
a) un premier guide linéaire horizontal (3) où se trouve une tête de pinces (13) qui peut se déplacer à l'horizontale et tourner sur le plan horizontal, avec une première pince (1) et une deuxième pince (2) pour l'entrée et la sortie d'un récipient à vide (b₁);
b) un deuxième guide linéaire horizontal (4) où se trouve une tête de remplissage (6) qui peut se déplacer à l'horizontale sur ce deuxième guide (4) et qui est équipée pour le remplissage total ou partiel avec une quantité prédéterminée;
c) une bascule (5) qui pèse le récipient (b₁) à vide et rempli dans sa totalité ou avec une quantité partielle prédéterminée, envoyant les données de pesage à
d) un microprocesseur qui commande le système programmé afin de différencier les récipients de remplissage total et les récipients de remplissage partiel et qui calcule la contenance en se basant sur les données de pesage.

2. Système de contrôle de la contenance de récipients, selon l'exigence antérieure, **caractérisé par** les mécanismes de remplissage qui se composent d'un ensemble de remplissage (7) total et liquide et d'un ensemble de mise à niveau (9) de liquide.

3. Système de contrôle de la contenance de récipients, selon la première exigence, **caractérisé par le fait que** l'ensemble de remplissage (7) liquide dispose d'une sonde (8) qui se déplace verticalement et que l'ensemble de mise à niveau (9) dispose d'un tube d'aspiration (11) qui se déplace verticalement par l'action d'un moteur de précision.

4. Système de contrôle de la contenance de récipients, selon la première exigence, **caractérisé par le fait que** géométriquement, sur lacirconférence du rayon de rotation de la première pince (1) se trouvent la position de pesage (p) et une position de remplissage (f), le centre de rotation se trouvant sur la bissectrice de la première et de la deuxième pince qui sont solidaires.

5. Système de contrôle de la contenance de récipients, selon la première exigence, **caractérisé par le fait que** la première pince (1) et la deuxième pince (2) sont munies de mâchoires de récipients et de cylindres d'approche /de retrait, l'une d'entre elles pouvant tourner sur son propre axe.

6. Système de contrôle de la contenance de récipients, selon la première exigence, **caractérisé par le fait qu'**il est équipé d'une ligne de transport d'entrée (1) et d'une ligne de transport de sortie (2) de récipients.

7. Système de contrôle de la contenance de récipients, selon la première exigence, **caractérisé par le fait que** le microprocesseur est programmé pour contrôler le système et différencier les récipients de remplissage total des récipients de remplissage partiel (b) et agissant sur le système de sorte que:
a) la première pince (1) prend sur une position initiale (i) un récipient (b₁) de la ligne de transport d'entrée (1) et met le récipient (b₁) vide en position de pesage (f) sur la bascule (5) où il est pesé et le place à l'horizontale sur la position de remplissage (f);
b) ensuite, la sonde de remplissage (8) disposée sur la verticale du récipient (b₁) se déplace pour remplir entièrement le récipient de liquide; s'il s'agit d'un récipient de remplissage total
c) la première pince (1) revient avec le récipient (b₁) en translation sur la position de pesage (p) où elle le pose sur la balance (5) et le pèse.
d) la première pince (1) revient à vide à sa position initiale
e) la deuxième pince (2) prend le récipient (b₁), tourne en le renversant, le vide et le retourne; si après avoir entièrement rempli le récipient, on se rend compte qu'il s'agissait d'un récipient à remplissage partiel,
f) on déplace un tube d'absorption (11) dans l'ensemble de mise à niveau (9) dans le goulot du récipient (b₁) pour une quantité prédéterminée (h) qui absorbe le liquide et dans tous les cas,
g) la deuxième pince (2) laissera le récipient vide sur la ligne de transport de sortie (t₂) quand la première pince (1) mettra le récipient vide (b1) sur la position de pesage (p).
